Europäisches Patentamt

European Patent Office

Office européen des brevets

(19)

(11) Publication number: **0 053 179**
**B1**

# EUROPEAN PATENT SPECIFICATION

(12)

(45) Date of publication of patent specification: **25.09.85**

(51) Int. Cl.⁴: **B 05 B 7/04**

(21) Application number: **81901952.2**

(22) Date of filing: **12.06.81**

(86) International application number:
**PCT/US81/00801**

(87) International publication number:
**WO 81/03627 24.12.81 Gazette 81/30**

(54) **FOAM DISPENSING GUN.**

(30) Priority: **16.06.80 US 159461**
**22.05.81 US 266494**

(43) Date of publication of application:
**09.06.82 Bulletin 82/23**

(45) Publication of the grant of the patent:
**25.09.85 Bulletin 85/39**

(84) Designated Contracting States:
**DE FR GB NL SE**

(56) References cited:
**US-A-3 237 809**
**US-A-3 399 837**
**US-A-3 559 890**
**US-A-3 633 795**
**US-A-3 784 110**
**US-A-4 117 551**

(73) Proprietor: **UNIVERSAL FOAM SYSTEMS INC.**
**1634 South Sunny Slope Road**
**New Berlin, WI 53151 (US)**

(72) Inventor: **HARDING, Gary C.**
**Route 1, Box 119**
**Thonotosassa, FL 33592 (US)**

(74) Representative: **Altenburg, Udo, Dipl.-Phys.**
**et al**
**Patent- und Rechtsanwälte Bardehle-**
**Pagenberg-Dost-Altenburg & Partner Postfach**
**86 06 20**
**D-8000 München 86 (DE)**

Courier Press, Leamington Spa, England.

EP 0 053 179 B1

## Description

Background of the Invention

This invention relates to apparatus for mixing and dispensing multi-component fluids and more particularly, it concerns foam dispensing guns adapted to be used with resin systems in which two or more fluid components, separately stored in pressurized vessels, are mixed and dispensed as settable foam.

US—A—3,399,837, 3,633,795 and 3,784,110 disclose dispensing guns for urethane foam and the like in which separate fluid components are fed individually to the gun, passed separately through controlled valve ports and brought into contact with each other only upon reaching a mixing chamber of a nozzle from which the mixed components are discharged as foam. In each instance, the nozzle of the gun is designed to be disposable in order to avoid the necessity for cleaning any part of the gun which comes into contact with mixed as distinguished from separate foam producing fluid components. As a result, the initial fluent characteristics of the foam producing components may be maintained without wastage even though use of the gun may be interrupted for time intervals of sufficient duration for the mixture to set in and plug the nozzle. In other words, the gun is restored to a ready-to-use condition simply by replacing a nozzle plugged by solidified or set foam.

The fluid components of the foam producing resin system used with dispensing guns exemplified by the disclosures of the aforementioned patents, are fed to the gun under pressures up to 17.2 bar (250 psi). Because of the pressure drop at the gun nozzle, the rate of fluid component flow is easily controlled by a relatively simple trigger actuated valve arrangement. Back pressure exerted on the nozzle in use, however, requires that the replaceable nozzle be retained on the gun body with sufficient holding force to handle the pressures involved without accidental dislodgement of the nozzle from the gun. In the past, the provision of a suitably strong nozzle mount has involved compromise with avoidance of complex, expensive or cumbersome gun structure.

An additional and particularly acute problem is presented in the design of such foaming guns due to the potential for accidental discharge of the fluid components when the nozzle is not in place on the gun. During the replacement of a nozzle, for example, accidental operation of the trigger-controlled valve on the gun could result in a sudden release of both fluid components under the pressures mentioned. The occurence of such accidental discharge presents not only a safety hazard to the operator of the gun but also a source of potential damage to previously dispensed foam and the working environment in general. While safety devices have been proposed, they have generally required positive action on the part of the gun operator to place the gun in a "safe" condition. Thus, failure of the operator to take such action will result in the gun being left in an unsafe condition where accidental discharge of the unmixed fluid components might occur.

In accordance with the present invention a foam dispensing gun is provided with a disposable nozzle mounting structure and integrated valve control trigger so that retention of the nozzle against component fluid pressure is assured and so that the control trigger is automatically disabled upon the removal of a nozzle from the gun. These functional attributes are achieved very simply by a breech component slidable between positions of nozzle retention and nozzle release in a direction perpendicular to the direction of fluid component flow from the body of the gun to the nozzle. The valve control trigger is supported pivotally from the breech to be in an operative relationship with gun body carried valve stems when the breech is positioned to retain a nozzle. When the breech is retracted to release the nozzle for removal, however, the trigger is pivoted to an inoperative position away from the valve stems and cannot be returned to the operative position without movement of the breech either to engage and retain a nozzle or to at least partially block the gun body ports through which the fluid components of the resin system are fed to the nozzle.

A principal object of the present invention is, therefore, the provision of an improved foam dispensing gun of the type adapted for use with disposable nozzles, which is highly effective in operation, which is capable of low-cost manufacture using a minimal number of easily formed and assembled components and which is inherently safe in use.

This object is achieved by means of the features of the characterising part of claim 1.

Other objects and further scope of applicability will become apparent from the detailed description to follow taken in conjunction with the accompanying drawings in which like parts are designated by like reference numerals.

Brief Description of the Drawings

Fig. 1 is a side elevation illustrating an assembled foam dispensing gun in accordance with the invention;

Fig. 2 is a fragmentary side elevation illustrating the gun of Fig. 1 with components positioned to receive a nozzle;

Fig. 3 is a cross-section on line 3—3 of Fig. 1;

Fig. 4 is an enlarged fragmentary cross-section on line 4—4 of Fig. 3;

Fig. 5 is an exploded perspective view illustrating cooperating components of the foam dispensing gun;

Fig. 6 is a fragmentary side elevation of an alternative embodiment of the invention;

Fig. 7 is a fragmentary side elevation of the embodiment of Fig. 6 with the nozzle removed and with movable components in one relative position;

Fig. 8 is a view similar to Fig. 7 but depicting movable components in another relative position; and

Fig. 9 is an exploded perspective view illustrating components in the embodiment of Fig. 6.

Detailed Description of the Preferred Embodiments

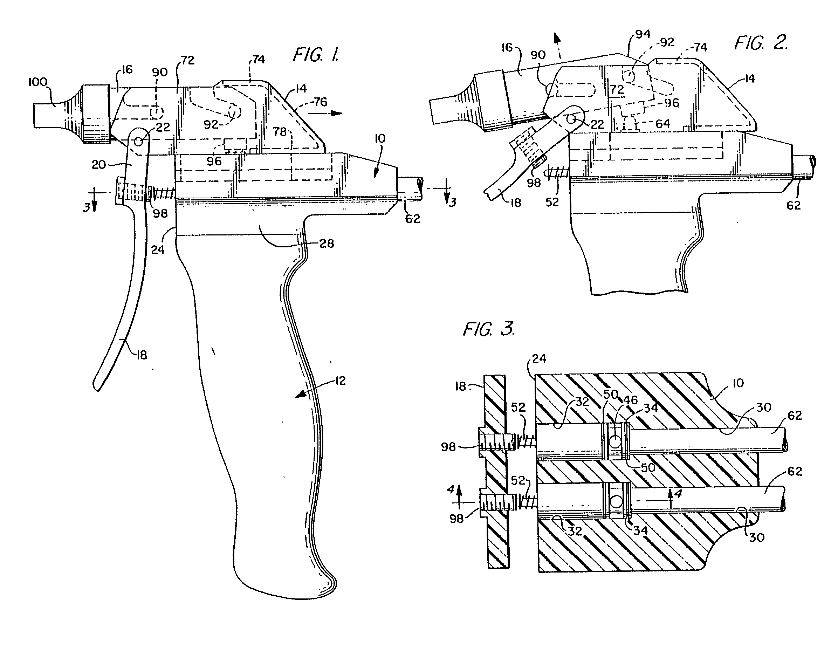

In Fig. 1 of the drawings, an embodiment of a foam dispensing gun of the present invention is shown to include a gun 10 and a handle 12 to which the gun body 10 is securely fixed by suitable means (not shown) such as interlocking dovetail formations, bonding, threaded fasteners or the like. Also, the handle and body may be integral. The gun body 10 supports a slidable breech 14 which, in turn, supports a disposable mixing nozzle 16 and a depending trigger 18 having a yoke 20 at its upper end for pivotal attachment to the sliding breech 14 by a pin 22. Although the structure of each of the components as well as the manner in which they cooperate during operation of the gun will be described in more detail below, it will be noted here that the gun body 10, the handle 12, the sliding breech 14 and the trigger 18 are unitary components formed of suitable synthetic resinous or plastic material shaped by injection molding techniques.

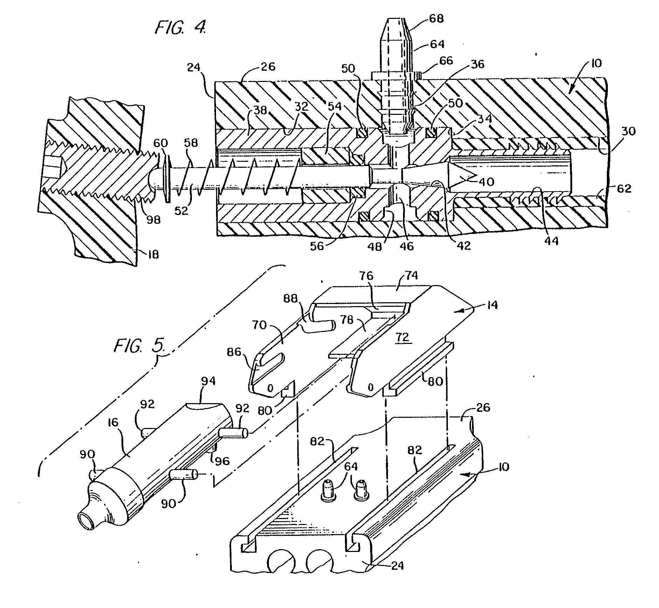

The gun body 10, as shown in Figs. 1, 2 and 5, is shaped externally to provide a front surface 24 joining at right angles with a planar top surface 26. A lower or base portion 28 is necked down to join with the top of the handle 12. Extending longitudinally through the body 10 are a pair of bores 30 and counterbores 32 the latter opening at the front face 24 and defining with the bores 30 annular ledges 34. A pair of vertical ports 36 extend between the counterbores 32 and the top surface 26 of the gun body as shown in Fig. 4.

Received within each of the counterbores 32 is a valve assembly including a generally cylindrical valve body 38 and a valve needle 40. The valve body 38 defines a rearwardly diverging tapered seat 42 against which the valve needle 40 seats to prevent passage of fluid in a direction from a barbed nipple portion 44 of the valve body through the seat 42 to radial valve discharge ports 46. The ports 46 open to a circular recess 48 defining with the counterbore 32 a discharge manifold located between a pair of O-ring seals 50 acting between the valve body 38 and the counterbore 32.

The valve needle 40 includes a stem 52 supported for axial movement in the valve body by an annular bushing 54. An O-ring seal 56 prevents passage of fluid from the region of the radial outlet ports 46 past the valve stem 52 and bushing 54. A valve seating spring 58 acts in compression between a press nut 60 at the outer end of the stem 52 and the bushing 54. Thus, in the absence of any external force, the valve needle 40 will be biased against the seat 42 or to a closed condition by the spring 58.

The barbed nipple portion 44 of each of the valve bodies 38 extends within one of two hoses 62 which connect the valve body 10 in fluid communication with separate sources of foam producing fluid components (not shown). The outside diameter of the hoses 62 is selected to fit slidably within the bores 30. The external diameter of the barbed nipple 44 is selected to fit within each of the hoses 62 and in a manner such that insertion of the valve body rearwardly of the gun body will result in the ends of the hoses 62 being seized between the barbed nipple portion 44 of the valve body 38 and the bores 30.

Press fit within each of the ports 36 is a nozzle coupling nipple 64. Each of the nipples 64 is provided with a stop flange 66 to limit the extent to which the coupling nipples may be depressed within the ports 36. Also, the projecting or top end of the nipple 64 is provided with a tapered seat 68.

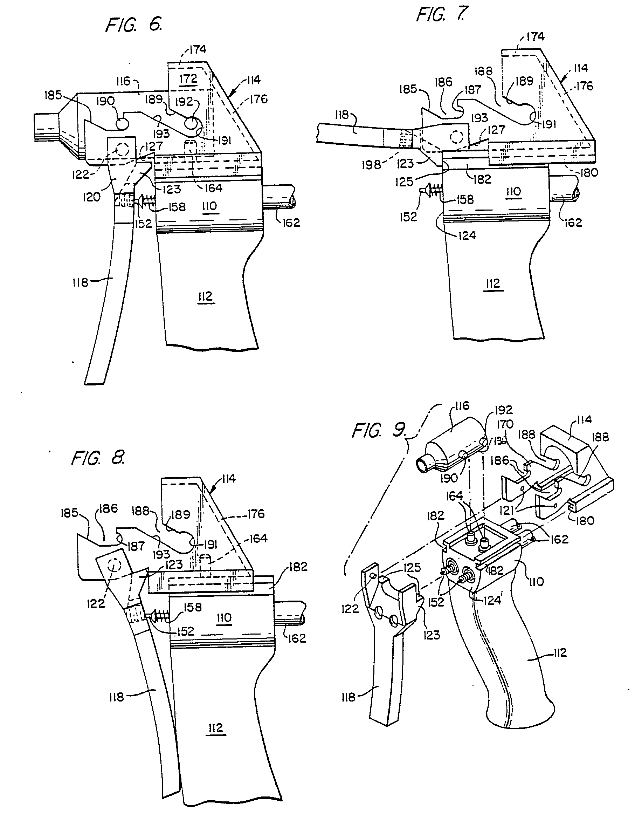

The breech 14, as indicated, is a one piece plastic molding shaped to establish a pair of laterally spaced vertical wall portions 70 and 72 joined by transverse top, rear and bottom wall formations 74, 76 and 78, respectively, (Figs. 1 and 5). These latter transverse walls extend from the rear of the breech 14 only partially along its length thus permitting the substantial forward portions of the walls 70 and 72 to project in open spaced relationship. At the bottom of each of the sidewalls 70 and 72 is an L-shaped rail 80 adapted to be received in one of a pair of complementing undercut or L-shaped grooves 82 formed in the top surface 26 of the gun body 10 as shown in Fig. 5. To facilitate assembly of the breech 14 with the body 10, the grooves 82 are open through the front surface 24 of the gun body 10 as shown in Fig. 5. After the rails 80 of the breech 14 are slid rearwardly into the slots 82, the coupling nipples 64 are inserted into the ports 36. As may be seen in Figs. 1, 2 and 5, the inserted nipples project past the bottom wall formation 78 to provide a front stop for limiting forward sliding movement of the breech relative to the gun body significantly beyond the position illustrated in Fig. 1 of the drawings. Rearward movement of the breech is restricted by the rear end of the L-shaped rails 80 striking the back of the slots 82 to achieve position illustrated in Fig. 2 of the drawings.

Each of the sidewall portions 70 and 72 of the breech 14 are provided with front and rear cam slots 86 and 88, respectively. As shown in Figs. 1, 2 and 5, the slots 86 and 88 are spaced to receive respective fore and aft lugs 90 and 92 projecting laterally from the nozzle 16.

The nozzle 16, as shown most clearly in Fig. 5 of the drawings, is a generally cylindrical member from which the lugs 90 and 92 project diametrically. A chamfer 94 is formed at the top rear edge of the body of the nozzle and also a pair of nozzle inlet port nipples 96 (Figs. 1, 2 and 5) project downwardly substantially in the plane of the rear lugs 92 in a manner to register with the coupling nipples 64 projecting upwardly from the top surface 26 of the gun body 10.

To assemble or load the nozzle 16 into an operative position, the breech 14 is slid rearwardly to a nozzle release position as shown in Fig. 2 of the drawings. In this position, the nozzle may be dropped downwardly so that the lugs 90 enter the forward opening of the cam slots 86 whereas the lugs 92 drop into the upper opening of the rear cam slots 88. A slight forward movement of the breech from the position shown in Fig. 2 will result in the inlet port nipples 96 on the nozzle 16 registering with and engaging the coupling nipples 64 sufficiently at least to prevent further forward movement of the nozzle 16. Upon continued movement of the breech 14 from the position shown in Fig. 2 to a nozzle retention position as shown in Fig. 1, the forward lugs 90 on the nozzle will undergo relative sliding movement in the cam slots 86 without substantial vertical variation. Because of the inclination of the rear cam slots 88 in the breech, however, the rear lugs 92 will be cammed downwardly so that the inlet nipples 96 on the nozzle move into a fluid tight engagement with the coupling nipples 64. To remove a nozzle 16 from the gun the procedure is merely reversed.

With reference again to Figs. 1 and 2 of the drawings, it will be noted that the trigger 18 carries suitable valve stem engaging means such as a pair of set screws 98 in a position to engage the ends of the valve stems 52 when the breech 14 is positioned to retain a nozzle 16 or in the position illustrated in Fig. 1. In this condition it will be appreciated that one grasping the handle 12 and squeezing the trigger 18 will cause the valve stems to move the valve needles 40 from the valve seats 42. Fluid components under pressure and supplied through the hoses 62 will pass simultaneously through the respective valve outlet ports 46, through the coupling nipples 64 and into the nozzle 16 where the fluid components are mixed and discharged as foam through a discharge orifice 100 on the nozzle 16. Also, it will be appreciated that by varying the extent to which the trigger 18 is moved in this manner, the rate of foam discharge from the nozzle orifice 100 may be regulated.

When the breech 14 is moved to its rear position for the release or replacement of a nozzle 16, however, the trigger pivot pin 22 will be carried with the breech and the trigger will be pivoted by engagement with the front surface 24 of the gun body to an inoperative position illustrated in Fig. 2. Moreover, any attempt to move the trigger 18 to a fluid discharging condition will result in forward movement of the breech.

In light of the pivotal support of the trigger 18 from the breech 14, a substantial measure of inherent safety is provided in the foam dispensing gun of the invention. Because of the need for mixing the two fluid components of the resin system, these separate components are supplied under high pressure to the gun body 10 by the way of the hoses 62. With a nozzle 16 in place, foam may be discharged with relative ease and accuracy of control through the nozzle orifice 100. If the needle valves 40 are opened while no nozzle 16 is in place, however, the fluid components will issue in high velocity streams through the open coupling nipples 64 thus representing a hazard both to the operator of the gun and to the work area in which the gun is being used. It is therefore important that the trigger 18 be disabled during nozzle replacement in the manner decribed above.

A further measure of safety is provided by the breech 14 in the event it is moved to the forward position of Fig. 1 without placement of a nozzle 16. In particular, the top and rear walls 74 and 76 on the breech serve to prevent accidental discharge of unmixed fluid components directly from the coupling nipples 64. As may be seen in Fig. 1, the top wall 74 becomes located above the nipples 64 when the breech is moved to the forward position. Hence, if the trigger was accidentally pulled without a nozzle 16 in place, the fluids issuing from the nipples 64 would strike the top wall 74 and be directed by the top wall and rear wall 76 forwardly away from the operator.

In Figs. 6—9 of the drawings, an alternative embodiment of the invention is shown in which parts corresponding either structurally or functionally to parts previously described with reference to Figs. 1—5 are designated by the same reference numerals but to which the number 100 has been added. As shown most clearly in Fig. 9, the gun components again include a body 110 supported by a handle 112, a slidable breech 114 for releasably retaining a nozzle 116 on the body 110 and a trigger 118 pivotally secured to the breech 114 by pins 122. In this embodiment, however, the body 110 and the breech 114 are slidably interconnected by cooperation between inwardly directed channel flanges 180 on the breech received in outwardly facing, open ended grooves 182 extending throughout the length of the body 110. This arrangement facilitates complete assembly of the body 110, including placement of the nozzle coupling nipples 164, prior to assembly of the body and breech merely by sliding the latter forwardly from the rear of the body. The trigger 118 may then be attached to the breech 114 by snap fitting the pins 122 into apertures 121 in forwardly extending portions of the sidewalls 170 and 172 of the breech.

The trigger 118 in the embodiment of Figs. 6—9 is formed with a pair of rearwardly projecting lugs 123 having shoulder-like abutment surfaces 125 at the upper edge thereof. The lugs 123 are in the region of the yoke 120 and are eccentric with respect to the trigger pivot axis as defined by the pins 122. Also as may be seen in Fig. 9, the width of the abutment surfaces 125 is such that these surfaces extend inwardly from the legs or the yoke 120. These surfaces will, therefore, ultimately engage ramp-like or chamfered surfaces 127 on the bottom edges of the breech sidewalls positioned rearwardly behind the pivot axis of the trigger.

As in the previous embodiment, the nozzle 116 is provided with pairs of diametrically projecting cylindrical lugs 190 and 192. Also, the sidewalls 170 and 172 of the breech 114 are provided with ramp formations 186 and 188 to cooperate with the lugs 190 and 192, respectively. In the instance, however, the formations 186 and 188 extend through the thickness of the sidewalls and are modified slightly in configuration. Specifically, each of the front sidewall formations 186 which cooperate with the lugs 190 include a single ejection ramp 185 and a semicircular end stop 187. The rear sidewall formations 188 include a downwardly facing top ramp surface 189 ending in a relatively large diameter circular surface 191 which in turn merges with an upwardly facing lower or ejection ramp surface 193.

Operation of the embodiment illustrated in Figs. 6—9 to load or unload the nozzle 116 may be understood by a comparison of Figs. 6—8. Thus, in Fig. 7, the breech 114 is pulled rearwardly to its limit of such movement as determined by engagement of the shoulder surfaces 125 on the lugs 123 with the front surface 124 of the body 110. In this condition, the trigger 118 is pivoted upwardly out of engagement with the valve pins 152 in a manner similar to the embodiment of Fig. 1—5. In this instance, however, the lugs 123 function to restrict accidental removal of the entire breech 114 from the body 110. The nozzle 116 is placed so that the diametric lugs 190 and 192 thereon rest respectively on the ramp surfaces 185 and 193. Also, the inlet port nipples 196 in the nozzle will be received over the coupling nipples 164 sufficiently to prevent forward movement of the nozzle 116. The breech 114 is then moved forward either by direct manual pressure or by downward movement of the trigger 118. In this latter respect, the lugs 123 act as crank arms which, upon such downward movement of the trigger 118, will cause forward movement of the breech 114. Such movement is continued until the semicircular stop in the front sidewall formation 186 engages the front pins 190. In this position which is illustrated in Fig. 6, the rear lug will be positioned under the upper portion of the enlarged circular opening 191 and be prevented from upward movement. Also in the position of Fig. 6, the gun is ready for actuation merely by squeezing the trigger 118 against the handle 112 to depress the valve pins 152 in the manner described above with respect to Figs. 1—5.

To eject the nozzle, the breech is pulled rearwardly to the position shown in Fig. 7. The cam surfaces 185 and 187 will coact with the lugs 190 and 192, respectively, to lift the nozzle from the nipples 164 for removal.

The condition which occurs in the absence of a nozzle 116 and in the event of accidental squeezing of the trigger 118 when no nozzle is in place, is illustrated in Fig. 8. In particular, the trigger 118 is shown pivoted over the valve pins 152 but with the breech 114 advanced forwardly to such an extent that no depression of the valve pins 152 can occur. In other words, when no nozzle is positioned in the breech and on the coupling nipples 164, the absence of the pins 190 for engagement of the pins by the semicircular end stops 187, coupled with the compressive resistance of the springs 158 urging the valve pins 152 forwardly, prevents trigger actuation of the valve pins 152. Continued forward movement of the breech 114 is ultimately restricted by the back wall surface 176 engaging the coupling nipples 164.

The embodiment of Figs. 6—9, therefore, has several advantages. In particular, the organization of components in this latter embodiment facilitates assembly. Additionally, the gun structure prevents accidental discharge of resin in the absence of a mixing nozzle 116 being in place. Further, loading of the nozzle is facilitated by the leverage effect of the lugs 123 on the trigger 118 as described above.

Thus it will be appreciated that as a result of the present invention, a highly effective foam dispensing gun is provided. It is contemplated and believed to be apparent to those skilled in the art from the preceding description that modifications and/or changes may be made in the disclosed embodiment without departure from the present invention. Accordingly, it is expressly intended that the forgoing description is illustrative of a preferred embodiment only, not limiting, and that the true spirit and scope of the present invention be determined by the appended claims.

**Claims**

1. A foam dispensing gun adapted to be connected to separate pressurized components to be mixed in and dispensed from the gun, said gun comprising a gun body (10, 110) with a pair of passageways (30, 32) for fluid components, valve means (38, 40) in each passageway and means (64, 164) defining outlets for the passageways; a disposable nozzle member (16, 116) adapted for fluid connection to the outlets; and means (14, 114) for releasably retaining the nozzle member on the gun body, characterized in that said outlets are coupling nipples (64, 164) projecting from the gun body in a first direction, in that said means for releasably retaining the nozzle member on the gun is a breech (14, 114) slidable on said gun body between at least first (Fig. 1) and second (Fig. 2) positions in a direction perpendicular to said first direction and in that the breech engages and supports the nozzle when in said first position.

2. The foam dispensing gun according to claim 1 characterized by trigger means (18, 118) for actuating said valve means (38, 40), said trigger means being pivotally supported by said breech (14, 114) to be operative when said breech is in said first position and inoperative when said breech is in said second position.

3. The foam dispensing gun according to claim 1 or 2, characterized in that the gun body (10) defines a top surface (26), said coupling nipples (64, 164) projecting from said top surface to engage a complementing inlet nipple (96, 196) on the disposable nozzle (16, 116) and to restrict movement of the nozzle in a direction parallel to said top surface and to the direction of sliding movement of said breech (14, 114) between said first and second positions.

4. The foam dispensing gun according to one of claims 1 to 3 characterized in that said means on said breech (14, 114) to engage and support a disposable nozzle (16, 116) includes front and rear pairs of cam formations (86, 88, 186, 188) to engage complementing lugs (90, 92, 190, 192) on the disposable nozzle.

5. The foam dispensing gun according to claim 4 characterized in that said rear cam formations (88, 188) define slots positioned substantially at the location of said coupling nipples (64, 164) and inclined to move the rear end of the nozzle (16, 116) toward said coupling nipples upon movement of said breech (14, 114) from said second position to said first position.

6. The foam dispensing gun acccording to one of claims 3 to 5 characterized in that said gun body (10) is formed having a pair of undercut parallel slots (82) in said top surface (26), said breech (14) having a pair of complementing rails (80) retained slidably in said undercut slots.

7. The foam dispensing gun according to one of claims 3 to 6 characterized in that said breech (14, 114) comprises a pair of laterally spaced vertical wall portions (70, 72, 170, 172) joined by transverse top (74, 174) and rear (76, 176) wall formations extending from the rear of the breech only partially along its length so that substantial forward portions of the vertical wall portions project in open spaced relationship, said top and rear transverse wall formations extending to be positioned over said coupling nipples (64, 164) when said breech is in said first position.

8. The foam dispensing gun according to one of claims 1 to 7, characterized in that said disposable nozzle (16, 116) is a cylindrical member having fore and aft lugs (90, 92, 190, 192) thereon projecting in a common diametric plane and a pair of inlet ports (96, 196) in a plane perpendicular to the plane of said lugs.

9. The foam dispensing gun according to claim 8, characterized in that the plane of said inlet ports (96, 196) includes said aft lugs (92, 192) said rear cam formations defining slots (88, 188) having an opening positioned in the plane of said coupling nipples (64, 164) when said breech (14, 114) is in said second position and being inclined to move said aft lugs and said inlet ports into engagement with said coupling nipples upon movement of said breech from said second to said first position.

10. The foam dispensing gun according to one of claims 2 to 9 characterized in that said gun body (10) comprises a front surface (24, 124), said valve means (38, 40) including actuating stem means (52, 152) projecting from said front surface, said trigger means (18, 118) depending from said breech (14, 114) when in said first position to be pivotal into engagement with said stem means.

11. The foam dispensing gun according to claim 10, characterized in that movement of said breech (14, 114) to said second position causes said trigger means (18, 118) to pivot by engagement with said front surface (24, 124) out of contact with said valve stem means (52, 152).

12. The foam gun according to one of claims 2 to 11, characterized by stop means (187) on said breech (114) engageable with said nozzle (116) to establish said first position, said breech being movable to a third position upon actuating movement of said trigger means (114) and in the absence of said nozzle to disable said trigger means for actuation of said valve means.

13. The foam dispensing gun according to one of claims 2 to 12 characterized in that said breech (114) and said body (116) are slidably interconnected by means including open ended guideways (180, 182), said trigger means (118) having stop lug means (123, 125) engageable with said body (110, 124) for limiting rearward movement of said breech to said second position.

14. The foam dispensing gun according to claim 13, characterized in that said stop lug means (123, 125) cooperate with said body (110, 124) to pry said breech (114) from said second position toward said first position upon actuating movement of said trigger means (118).

15. The foam dispensing gun according to one of claims 2 to 14 characterized by yieldable biasing means (158) for retaining said valve means (38, 40) in a closed condition, said valve means being moved toward an open condition by actuating movement of said trigger means (118) against biasing means when said breech (114) is retained in said first position by engagement of said nozzle (116), said trigger means being pivotal about said biasing means, thereby to move said breech to said third position in the absence of a nozzle.

**Patentansprüche**

1. Schaumauftragpistole zur Verbindung mit gesonderten Druckfluidkomponenten, welche in der Pistole gemischt und von der Pistole abgegeben werden, mit einem Pistolengehäuse (10, 110) mit einem Paar von Durchlaßkanälen (30, 32) für Fluidkomponenten, Ventileinrichtungen (38, 40) in jedem Durchlaßkanal und Einrichtungen (64, 164), welche Auslässe für die Durchlaßkanäle bestimmen, einem verfügbaren Düsenelement (16, 116), welches mit den Auslässen in Fluidverbindung steht, und Einrichtungen (14, 114) zum lösbaren Halten des Düsenelementes auf dem Pistolengehäuse, dadurch gekennzeichnet, daß die Auslässe Kupplungsanschlußstücke (64, 164) sind, welche in einer ersten Richtung von dem Pistolengehäuse vorspringen, daß die Einrichtungen zum lösbaren Halten des Düsenelementes auf dem Pistolengehäuse aus einem Verschlußmechanismus (14, 114) bestehen, der auf dem Pistolengehäuse zwischen einer ersten (Fig. 1) und einer zweiten Position (Fig. 2) in einer Richtung verschiebbar ist, die senkrecht zu der ersten Richtung verläuft, und daß der Verschlußmechanismus in der ersten Position mit der Düse in Eingriff steht und diese lagert.

2. Schaumauftragpistole nach Anspruch 1, gekennzeichnet durch Auslöseeinrichtungen (18, 118) zum Betätigen der Ventileinrichtungen (38, 40), wobei die Auslöseeinrichtungen schwenkbar an dem Verschlußmechanismus (14, 114) gelagert sind, um betriebsbereit zu sein, wenn der Verschlußmechanismus in der ersten Position ist, und um außer Betrieb zu sein, wenn der Verschlußmechanismus in der zweiten Position ist.

3. Schaumauftragpistole nach Anspruch 1 oder 2, dadurch gekennzeichnet, daß das Pistolengehäuse (10) eine Oberseite (26) aufweist, von welcher die Kupplungsanschlußstücke (64, 164) vorspringen, welche mit einem komplementären Einlaßanschlußstück (96, 196) auf der verfügbaren Düse (16, 116) in Eingriff bringbar sind und die Bewegung der Düse in einer Richtung parallel zur Oberseite und zur Richtung der Verschiebungsbewegung des Verschlußmechanismus (14, 114) zwischen der ersten und zweiten Position begrenzt.

4. Schaumauftragpistole nach einem der Ansprüche 1 bis 3, dadurch gekennzeichnet, daß die Einrichtungen auf dem Verschlußmechanismus (14, 114), welche mit der verfügbaren Düse (16, 116) in Eingriff bringbar sind und diese lagern, aus einem vorderen und hinteren Paar von Nockenbahnen (86, 88, 186, 188) bestehen, welche mit komplementären Stiften (90, 92, 190, 192) auf der verfügbaren Düse in Eingriff bringbar sind.

5. Schaumauftragpistole nach Anspruch 4, dadurch gekennzeichnet, daß die hinteren Nockenbahnen (88, 188) Schlitze begrenzen, welche im wesentlichen am Ort der Kupplungsanschlußstücke (64, 164) positioniert sind und das hintere Ende der Düse (16, 116) zu den Kupplungsanschlußstücken bei Bewegung des Verschlußmechanismus (14, 114) von der ersten zur zweiten Position bewegen.

6. Schaumauftragpistole nach einem der Ansprüche 3 bis 5, dadurch gekennzeichnet, daß das Pistolengehäuse (10) ein Paar von hinterschnittenen parallelen Schlitzen (82) in der Oberseite (26) und der Verschlußmechanismus (14) ein Paar von komplementären Schienen (80) aufweist, die verschiebbar in den hinterschnittenen Schlitzen gehalten sind.

7. Schaumauftragpistole nach einem der Ansprüche 3 bis 6, dadurch gekennzeichnet, daß der Verschlußmechanismus (14, 114) ein Paar von seitlich beabstandeten, vertikalen Wandteilen (70, 72, 170, 172) aufweist, welche durch querverlaufende obere (74, 174) und hintere Wandteile (76, 176) verbunden sind, die sich vom Hinterende des Verschlußmechanismus nur teilweise längs dessen Längserstreckung erstrecken, so daß wesentliche vordere Teile der vertikalen Wandteile in offener beabstandeter Beziehung vorspringen, wobei die oberen und hinteren querverlaufenden Wandteile so verlaufen, daß sie über den Kupplungsanschlußstücken (64, 164) positioniert sind, wenn der Verschlußmechanismus in der ersten Position ist.

8. Schaumauftragpistole nach einem der Ansprüche 1 bis 7, dadurch gekennzeichnet, daß die verfügbare Düse (16, 116) ein zylindrisches Bauteil mit vorderen und hinteren Stiften (90, 92, 190, 192), welche in einer gemeinsamen diametralen Ebene vorspringen, und mit einem Paar von Einlaßöffnungen (96, 196) in einer Ebene senkrecht zu der Ebene der Stifte ist.

9. Schaumauftragpistole nach Anspruch 8, dadurch gekennzeichnet, daß die Ebene der Einlaßöffnungen (96, 196) die hinteren Stifte (92, 192) beinhaltet und daß die hinteren Nockenbahnen Schlitze (88, 188) mit einer Öffnung bestimmen, die in der Ebene der Kupplungsanschlußstücke (64, 164) positioniert ist, wenn der Verschlußmechanismus (14, 114) in der zweiten Position ist, und daß die Schlitze die hinteren Stifte und die Einläßöffnungen in Eingriff mit den Kupplungsanschlußstücken bringen bei der Bewegung des Verschlußmechanismus von der zweiten in die erste Position.

10. Schaumauftragpistole nach einem der Ansprüche 2 bis 9, dadurch gekennzeichnet, daß das Pistolengehäuse (10) eine Vorderseite (24, 124) aufweist, daß die Ventileinrichtungen (38, 40) Betätigungsschafteinrichtungen (52, 152) aufweisen, welche von der Vorderseite vorspringen, und daß die Auslöseeinrichtungen (18, 118) von dem Verschlußmechanismus (14, 114) in der ersten Position herabhängen und schwenkbar mid den Schafteinrichtungen in Eingriff bringbar sind.

11. Schaumauftragpistole nach Anspruch 10, dadurch gekennzeichnet, daß eine Bewegung des Verschlußmechanismus (14, 114) in die zweite Position eine Verschwenkung der Auslöseeinrichtungen (18, 118) durch Eingriff mit der Vorderseite (24, 124) verursacht, wodurch die Auslöseeinrichtungen außer Kontakt mit den Ventilschafteinrichtungen (52, 152) kommen.

12. Schaumauftragpistole nach einem der Ansprüche 2 bis 11, gekennzeichnet durch Anschlageinrichtungen (187) auf dem Verschlußmechanismus (114), die mit der Düse (116) zur Festlegung der ersten Position in Eingriff bringbar sind, wobei der Verschlußmechanismus nach einer Betätigungsbewegung der Auslöseeinrichtungen (114) und in Abwesenheit der Düse in eine dritte Position bewegbar ist, um die Auslöseeinrichtungen für die Betätigung der Ventileinrichtungen außer Betrieb zu setzen.

13. Schaumauftragpistole nach einem Anspruch 2 bis 12, dadurch gekennzeichnet, daß der Verschlußmechanismus (114) und das Gehäuse (110) durch Einrichtungen verschiebbar miteinander verbunden sind, die offen endende Führungsbahnen (180, 182) aufweisen, und daß die Auslöseeinrichtungen (118) Anschlagansatzeinrichtungen (123, 125) aufweisen, welche mit dem Gehäuse (110, 124) zur Begrenzung der rückwärtigen Bewegung des Verschlußmechanismus in die zweite Position in Eingriff bringbar sind.

14. Schaumauftragpistole nach Anspruch 13, dadurch gekennzeichnet, daß die Anschlagansatzeinrichtungen (123, 125) mit dem Gehäuse (110, 124) zusammenwirken, um den Verschlußmechanismus (114) bei einer Betätigungsbewegung der Auslöseeinrichtungen (118) von der zweiten Position in die erste Position zu stemmen.

15. Schaumauftragpistole nach einem der Ansprüche 2 bis 14, gekennzeichnet durch nachgiebige Vorspanneinrichtungen (158), um die Ventileinrichtungen (38, 40) in einem geschlossenen Zustand zu halten, wobei die Ventileinrichtungen durch eine Betätigungsbewegung der Auslöseeinrichtungen (118) gegen die Vorspanneinrichtungen in einen offenen Zustand bewegt werden, wenn der Verschlußmechanismus (114) in der ersten Position durch Eingriff der Düse (116) gehalten ist, wobei die Auslöseeinrichtungen um die Vorspanneinrichtungen schwenkbar sind, wodurch der Verschlußmechanismus bei Abwesenheit einer Düse in die dritte Position bewegbar ist.

**Revendications**

1. Pistolet de distribution de mousse adapté pour être raccordé à des composants liquides séparés sous pression pour être mélangés et distribués par le pistolet, ledit pistolet comprenant un corps de pistolet (10, 110) avec une paire de passages (30, 32) pour des composants liquides, des moyens formant soupapes (38, 40) dans chaque passage et des moyens (64, 164) définissant des orifices de sortie pour les passages; un élément formant buse à usage unique (16, 116) adapté pour le raccordement de liquides aux orifices de sortie; et des moyens (14, 114) pour retenir de manière amovible l'élément formant buse sur le corps de pistolet, caractérisé en ce que lesdits orifices de sortie sont des embouts de couplage (64, 164) faisant saillie du corps de pistolet dans une première direction, en ce que lesdits moyens destinés à retenir de manière amovible l'élément formant buse sur le corps de pistolet est une culasse (14, 114) coulissant sur ledit corps de pistolet entre au moins une première (figure 1) et une seconde (figure 2) positions dans une direction perpendiculaire à ladite première direction et en ce que la culasse s'enclenche sur la buse et la supporte quand elle est dans ladite première position.

2. Pistolet de distribution de mousse selon la revendication 1, caractérisé par des moyens formant gachette (18, 118) pour commander lesdits moyens formant soupapes (38, 40) ledit moyen formant gachette étant supporté de manière articulée par ladite culasse (14, 114) pour être fonctionnel quand ladite culasse est dans ladite première position, et non fonctionnelle quand ladite culasse est dans ladite seconde position.

3. Pistolet de distribution de mousse selon la revendication 1 ou 2, caractérisé en ce que le corps de pistolet (10) définit une surface supérieure (26), lesdits embouts de couplage (64, 164) faisant saillie de ladite surface supérieure pour s'enclencher sur un embout d'entrée complémentaire (96, 196) situé sur la buse à usage unique (16, 116) et pour limiter le mouvement de la buse dans une direction parallèle à ladite surface supérieure et dans le sens du mouvement coulissant de ladite culasse (14, 114) comprise entre lesdites première et seconde positions.

4. Pistolet de distribution de mousse selon l'une des revendications 1 à 3, caractérisé en ce que ledit moyen disposé sur ladite culasse (14, 114) pour s'enclencher sur une buse à usage unique (16, 116) et la supporter, comporte des paires d'évidements antérieurs et postérieurs formant cames (86, 88, 186, 188) pour s'enclencher sur les ergots complémentaires (90, 92, 190, 192) sur la buse à usage unique.

5. Pistolet de distribution de mousse selon la revendication 4, caractérisé en ce que lesdits évidements postérieurs formant cames (88, 188) définissent des fentes disposées sensiblement à l'endroit où se trouvent lesdits embouts de couplage (64, 164) et inclinés pour déplacer l'extrémité postérieure de la buse (16, 116) vers lesdits embouts de couplage sous le mouvement de ladite culasse (14, 114) à partir de ladite seconde position vers ladite première position.

6. Pistolet de distribution de mousse selon l'une des revendications 1 à 5 caractérisé en ce que ledit corps de pistolet est constitué par une paire de fentes de dégagement parallèles (82) ménagée dans ladite surface supérieure (26), ladite culasse (14) ayant une paire de rails complémentaires (80) retenue de manière coulissante dans lesdites fentes de dégagement.

7. Pistolet de distribution de mousse selon l'une des revendications 3 à 6 caractérisé en ce que ladite culasse (14, 114) comprend une paire de parties de parois verticales espacées latéralement (70, 72, 170, 172) réunies par un dessus transversal (74, 174) et des évidements postérieurs (76, 176) ménagés dans les parois et se développant depuis l'arrière de la culasse seulement partiellement suivant sa longueur de manière que des parties antérieures appréciables de parois verticales fassent saillie librement, lesdits évidements transversaux supérieur et postérieur ménagés dans les parois se prolongeant pour venir se placer au-dessus desdits embouts de couplage (64, 164) quand ladite culasse est dans ladite première position.

8. Pistolet de distribution de mousse selon l'une des revendications 1 à 7, caractérisé en ce que ladite buse à usage unique (16, 116) est un élément cylindrique ayant des ergots antérieurs et postérieurs (90, 92, 190, 192) faisant dans un plan diamétral commun et une paire d'orifices d'entrée (96, 196) situé dans un plan perpendiculaire au plan desdits ergots.

9. Pistolet de distribution de mousse selon la revendication 8, caractérisé en ce que le plan desdits orifices d'entrée (96, 196) comporte lesdits ergots postérieurs (92, 192) lesdits évidements formant cames définissant des fentes (88, 188) ayant un orifice disposé dans le plan desdits embouts de couplage (64, 164) quand ladite culasse (14, 114) est dans ladite seconde position et étant inclinée pour déplacer lesdits ergots postérieurs et lesdits orifices d'entrée en prise avec lesdits embouts de couplage par le déplacement de ladite culasse de ladite seconde à ladite première position.

10. Pistolet de distribution de mousse selon l'une des revendications 2 à 9, caractérisé en ce que ledit corps de pistolet (10) comprend une surface antérieure (24, 124), lesdits moyens formant soupapes (38, 40) comportant des moyens de commande formant queues de soupapes (52, 152) faisant saillie de ladite surface antérieure, lesdits moyens formant gachette (18, 118) dépendant de ladite culasse (14, 114) quand elle est dans ladite première position pour être articulée en prise avec lesdits moyens formant queues de soupapes.

11. Pistolet de distribution de mousse selon la revendication 10, caractérisé en ce que le mouvement de ladite culasse (14, 114) vers ladite seconde position amène ledit moyen formant gachette (18, 118) à pivoter par enclenchement avec ladite surface antérieure (24, 124) sans contact avec lesdits moyens formant queues de soupapes (52, 152).

12. Pistolet à mousse selon l'une des revendications 2 à 11, caractérisé par des moyens formant butées (187) disposés sur ladite culasse (114) enclenchables avec ladite buse (116) pour réaliser ladite première position, ladite culasse étant mobile jusqu'à une troisième position par mouvement de commande dudit moyen formant gachette (114) et en l'absence de ladite buse pour empêcher lesdits moyens formant gachette de commander lesdits moyens formant soupapes.

13. Pistolet de distribution de mousse selon l'une des revendications 2 à 12, caractérisé en ce que ladite culasse (114) et ledit corps. (116) sont assemblés de manière coulissante par des moyens comportant des passages à extrémités libres (180, 182), ledit moyen formant gachette (118) ayant des moyens formant ergots de butée (123, 125) enclenchables avec ledit corps (110, 124) pour limiter le mouvement de recul de ladite culasse vers ladite seconde position.

14. Pistolet de distribution de mousse selon la revendication 13, caractérisé en ce que lesdits moyens formant ergots de butée (123, 125) coopèrent avec ledit corps (110, 124) pour déplacer ladite culasse (114) de ladite seconde position vers ladite première position par un mouvement de commande dudit moyen formant gachette (118).

15. Pistolet de distribution de mousse selon l'une des revendications 2 à 14 caractérisé par un moyen de maintien souple (158) pour retenir lesdits moyens formant soupapes (38, 40) en position fermée, lesdits moyens formant soupapes étant déplacés vers une situation d'ouverture par le mouvement de commande dudit moyen formant gachette (118) contre ledit moyen de maintien quand ladite culasse (114) est retenue dans ladite première position par enclenchement de ladite buse (116), ledit moyen formant gachette étant articulé autour desdits moyens de maintien, pour déplacer par ce moyen ladite culasse vers ladite troisième position en l'absence de buse.

FIG. 1.

FIG. 2.

FIG. 3.

FIG. 4.

FIG. 5.

0 053 179

0 053 179

FIG. 6.

FIG. 7.

FIG. 8.

FIG. 9.

3